# EUROPEAN PATENT SPECIFICATION

(11) **EP 1 749 694 B1**
(45) Date of publication and mention of the grant of the patent: **02.11.2011**
(21) Application number: 06118190.5
(22) Date of filing: 31.07.2006
(51) Int. Cl.: B60N 2/30, B60N 2/34, B62D 33/06

(54) **Auxiliary seat for a driver's cab, especially for the cab of an industrial vehicle, and a driver's cab equipped with said auxiliary seat**
Zusatzsitz für ein Fahrerhaus, insbesondere für ein Fahrerhaus eines Nutzfahrzeugs, und ein mit dem Zusatzsitz ausgestattetes Fahrerhaus
Siège auxiliaire pour une cabine de conduite, notamment pour une cabine de conduite d'un véhicule utilitaire, et une cabine de conduite équipée avec le siège auxiliaire

(30) Priority: 01.08.2005 IT MI20051505
(43) Date of publication of application: 07.02.2007
(73) Proprietor: IVECO S.p.A., 10156 Torino (IT)
(72) Inventor: Ropolo, Bruno, 14010, SAN PAOLO SOLBRITO (IT); Raviola, Claudio, 10040, RIVALTA DI TORINO (IT)
(74) Representative: Borsano, Corrado

(56) References cited:
- WO-A1-02/12015
- DE-A1- 2 923 223
- DE-A1- 4 114 554
- FR-A1- 2 265 593
- US-A- 2 634 429

## Description

The present invention relates to a driver's cab, especially for the cab of an industrial vehicle, equipped with an auxiliary seat.

As is known, cabs of industrial vehicles, in particular of long-distance lorries, are traditionally provided with two seats arranged side by side in the front part of the cab, one being the driving seat and the other being for a passenger, who may be a second driver so that two people can take it in turns to drive.

This pair of seats may not be sufficient if there are more people in the cab, or if the passenger seat has to be removed to make more room in the cab.

The problem thus arises of the need to install an auxiliary seat in the rear part of the cab. Said seat must be easy to use, implemented at low cost and take up as little room as possible without having to reduce the level of comfort in the cab. The purpose of the present invention is to solve the problems described above with an auxiliary seat for a driver's cab, especially for the cab of an industrial vehicle.

WO 02/12015 discloses a driver's cab according to the preamble of claim 1

FR2265593 disclose an auxiliary seat of the type disclosed in claim 1.

The present invention relates to a driver's cab, especially for industrial vehicle equipped with auxiliary seat, as described more fully in the claims, which are an integral part of this description.

The purposes and advantages of this invention will become clear from the following detailed description of a preferred embodiment (and the relative alternative embodiments) and the drawings that are attached hereto, which are merely illustrative and not limitative, in which:

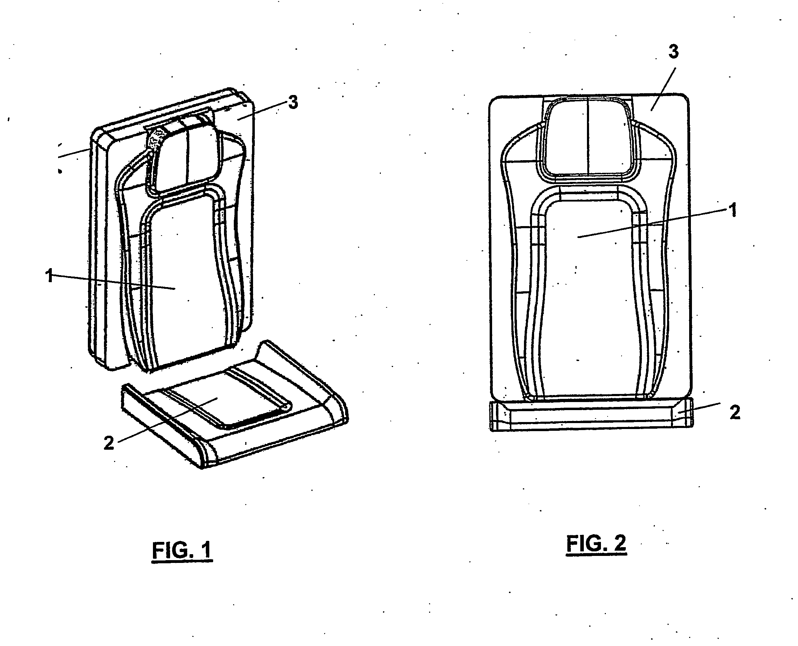

figures 1, 2, 3 illustrate an auxiliary seat according to the present invention, in the open position respectively in an axonometric, front and side view;
figure 4 is a side view of the auxiliary seat in the closed position;
figures 5 and 6 illustrate the auxiliary seat integrated in a bed in the driver's cab.

In the drawings the same reference numbers and letters are used to indicate the same parts.

Cabs of industrial vehicles are usually equipped with beds, located in the area behind the seats, to allow the driver or passenger to rest inside the actual cab.

Said beds comprise a supporting structure, possibly consisting of several sections, anchored to the cab, possibly so as to enable the structure to be folded away or removed, that houses one or more mattresses resting on a spring base.

The basic idea of the present invention is to integrate an auxiliary seat in the underside of the folding supporting structure of a bed installed in the area behind the front seats in the cab.

More precisely, use is made of a section 3 of the supporting structure, hereinafter referred to as the frame, that can be folded in relation to an axis of rotation A. For example in the drawings a section on one side is used.

The backrest 1 of the auxiliary seat is fixed to the underside of the frame 3, so that it is one with the frame, while the seat 2 of the auxiliary seat is independent of the frame-backrest structure. Said seat 2 may be joined to the axis of rotation A and may be folded separately in relation to the backrest.

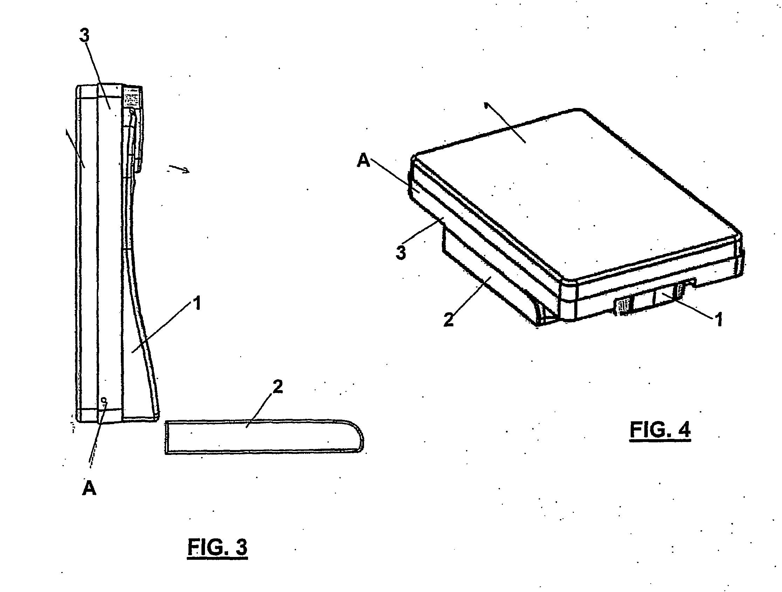

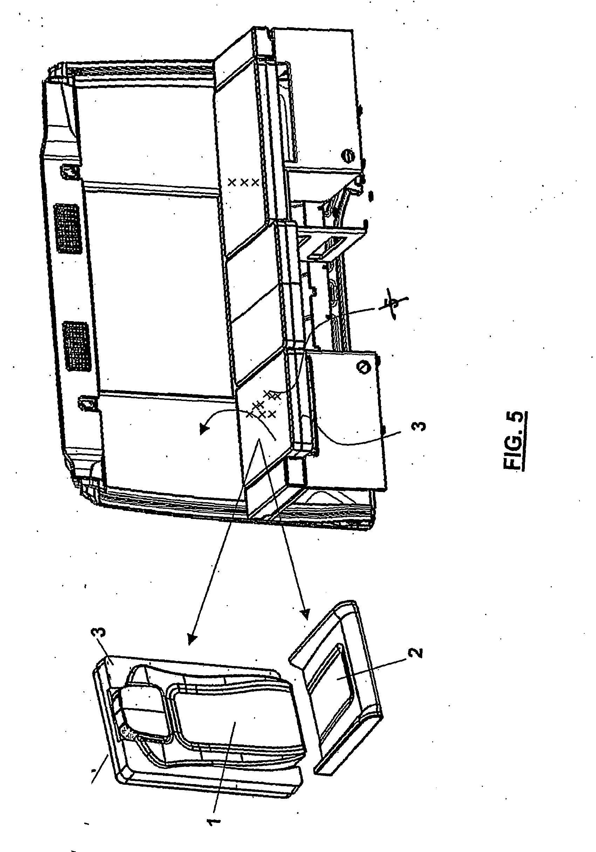

As is clear from figure 3, the seat can be used by simply folding the frame 3 upwards in relation to the axis of rotation A (figures 3 and 5) placing it in a substantially vertical position making the backrest 1 available, while the seat 2 is left in the horizontal position.

On the other hand, when the frame 3 is in the horizontal position (figures 4 and 5), the seat disappears under the frame, so that the bed can be used.

The amount of space taken up by the auxiliary seat when folded away can be further reduced if the backrest 1 and seat 2 are reciprocally shaped, so that they match, eliminating any space between them (figure 4).

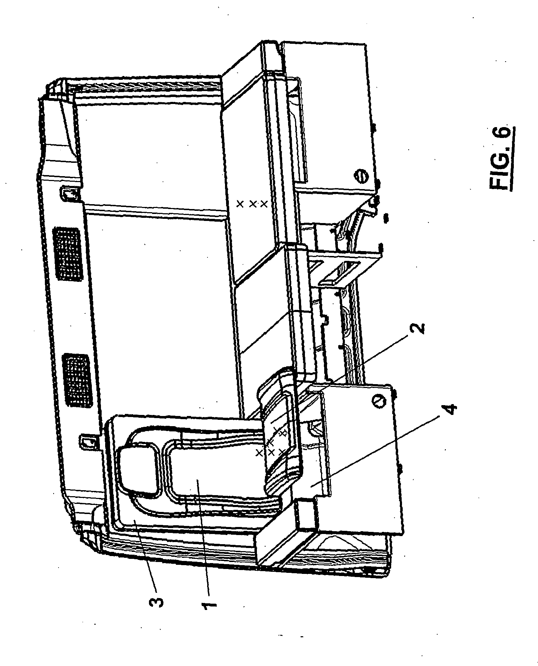

As can be seen in figure 6, the seat 2 can also be removed or folded separately in relation to the backrest, giving access to the compartment 4 under the bed, which can thus be used to store objects or for other purposes.

The auxiliary seat can be made of any suitable material of a type that is known.

It will be apparent to the person skilled in the art that other alternative and equivalent embodiments of the invention can be conceived and reduced to practice without departing from the true spirit of the invention.

In case of a bed made up of more than one frame, the auxiliary seat is arranged in one of said frames. However, the auxiliary seat may also be implemented in case of a bed consisting of a single frame, provided it is of the folding type. Moreover the auxiliary seat may be arranged in any position in relation to the width of the bed, as required. A number of auxiliary seats may be implemented side by side.

From the description set forth above it will be possible for the person skilled in the art to embody the invention without introducing any further construction details.

## Claims

1. Driver's cab, especially of an industrial vehicle, equipped with a bed located in the area behind the front seats, to allow the driver or passenger to rest inside the cab, said bed comprising a supporting structure (3) anchored to the cab so as to enable the structure (3) to be folded away or removed, the cab being **characterised by** being equipped with one or more auxiliary seats integrated in the underside of the folding supporting structure (3) comprising a backrest (1) and a seat (2), the backrest (1) being fixed to the underside of the structure (3) so as to be available when the structure (3) is in a substantially vertical position, the one or more auxiliary seat disappearing under the structure (3), when the latter is in the horizontal position, wherein the cab further comprises a compartment (4) under the bed and wherein the seat (2) is separately foldable in relation to the backrest (1) giving access to the compartment (4).

2. Cab according to claim 1, **characterized in that** said supporting structure (3) and said backrest (1) are foldable on a rotation axis A.

3. Cab according to claim 1, **characterized in that** said underside of the folding supporting structure (3) comprises a single section, and said one or more auxiliary seat is integrated in any point of said underside of said folding supporting structure (3).

4. Cab according to claim 1, **characterized in that** said underside of the folding supporting structure (3) comprises a number of sections, and said one or more auxiliary seat is integrated in one of said sections.

5. Cab according to claim 1, **characterized in that** the backrest (1) and seat (2) are reciprocally shaped so that they match, eliminating any space between them.

## Patentansprüche

1. Fahrerhaus insbesondere für ein gewerbliches Fahrzeug, das mit einem Bett ausgestattet ist, das in dem Bereich hinter den Vordersitzen angeordnet ist, um zu ermöglichen, dass der Fahrer oder ein Passagier innerhalb des Fahrerhauses ruhen kann, wobei das Bett einen Stützaufbau (3) umfasst, der mit der Kabine verankert ist, um so zu ermöglichen, dass der Aufbau (3) weggeklappt oder entfernt werden kann, wobei das Fahrerhaus **dadurch gekennzeichnet ist, dass** es mit einem oder mehreren Zusatzsitzen ausgestattet ist, die in die Unterseite des klappenden Stützaufbaus (3) integriert sind und eine Rückenlehne (1) und einen Sitz (2) umfassen, wobei die Rückenlehne (1) an der Unterseite des Aufbaus (3) fixiert ist, um so verfügbar zu sein, wenn der Aufbau (3) in einer im Wesentlichen vertikalen Position ist, wobei der eine oder die mehreren Zusatzsitze unter dem Aufbau (3) verschwinden, wenn dieser sich in der horizontalen Position befindet, wobei das Fahrerhaus ferner ein Fach (4) unter dem Bett umfasst, und wobei der Sitz (2) separat in Bezug auf die Rückenlehne (1) klappbar ist, wodurch sich ein Zugang zu dem Fach (4) ergibt.

2. Fahrerhaus nach Anspruch 1,
**dadurch gekennzeichnet, dass** der Stützaufbau (3) und die Rückenlehne (1) an einer Rotationsachse (A) klappbar sind.

3. Fahrerhaus nach Anspruch 1,
**dadurch gekennzeichnet, dass** die Unterseite des klappenden Stützaufbaus (3) einen einzelnen Abschnitt umfasst, und der eine oder die mehreren Zusatzsitze an einem Punkt der Unterseite des klappenden Stützaufbaus (3) integriert ist/sind.

4. Fahrerhaus nach Anspruch 1,
**dadurch gekennzeichnet, dass** die Unterseite des klappenden Stützaufbaus (3) eine Anzahl von Abschnitten umfasst, und der eine oder die mehreren Zusatzsitze in einen der Abschnitte integriert ist/sind.

5. Fahrerhaus nach Anspruch 1,
**dadurch gekennzeichnet, dass** die Rückenlehne (1) und der Sitz (2) reziprok geformt sind, so dass sie zusammenpassen, wobei jeglicher Raum zwischen diesen beseitigt wird.

## Revendications

1. Cabine de conduite, en particulier d'un véhicule industriel, équipée d'un lit positionné dans la zone située derrière les sièges avant, pour permettre au conducteur ou au passager de se reposer à l'intérieur de la cabine, ledit lit comprenant une structure de support (3) ancrée à la cabine afin de permettre de replier ou de retirer la structure (3), la cabine étant **caractérisée en ce qu'**elle est équipée d'un ou de plusieurs sièges auxiliaires intégrés dans la face inférieure de la structure de support pliante (3) comprenant un dossier (1) et un siège (2), le dossier (1) étant fixé sur la face inférieure de la structure (3) afin d'être disponible lorsque la structure (3) est dans une position sensiblement verticale, les un ou plusieurs sièges auxiliaires disparaissant sous la structure (3), lorsque cette dernière est dans la position horizontale, dans laquelle la cabine comprend en outre un compartiment (4) sous le lit et dans laquelle le siège (2) est séparément pliable par rapport au dossier (1) donnant accès au compartiment (4).

2. Cabine selon la revendication 1, **caractérisée en ce que** ladite structure de support (3) et ledit dossier (1) sont pliables sur un axe de rotation (A).

3. Cabine selon la revendication 1, **caractérisée en ce que** ladite face inférieure de la structure de support pliante (3) comprend une seule section, et lesdits un ou plusieurs sièges auxiliaires sont intégrés dans n'importe quel point de ladite face inférieure de ladite structure de support pliante (3).

4. Cabine selon la revendication 1, **caractérisée en ce que** ladite face inférieure de la structure de support pliante (3) comprend un certain nombre de sections, et lesdits un ou plusieurs sièges auxiliaires sont intégrés dans l'une desdites sections.

5. Cabine selon la revendication 1, **caractérisée en ce que** le dossier (1) et le siège (2) sont formés de manière réciproque de sorte qu'ils correspondent, supprimant tout espace entre eux.
